(19) Europäisches Patentamt
European Patent Office
Office européen des brevets

(11) EP 3 859 187 A1

(12) EUROPEAN PATENT APPLICATION

(43) Date of publication:
04.08.2021 Bulletin 2021/31

(51) Int Cl.:
F16F 7/10 (2006.01)

(21) Application number: 20155119.9

(22) Date of filing: 03.02.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Tophøj & Grathwol ApS
4600 Køge (DK)

(72) Inventors:
• Tophøj, Laust
  4600 Køge (DK)
• Grathwol, Nikolaj
  4600 Køge (DK)

(74) Representative: Betten & Resch
Patent- und Rechtsanwälte PartGmbB
Maximiliansplatz 14
80333 München (DE)

(54) PENDULUM VIBRATION DAMPER

(57) The invention refers to a pendulum vibration damper (10) for damping vibrations of a structure (12), comprising:
- a pendulum body (14) having a mass (m);
- at least three hangers (16) configured to hingedly suspend said pendulum body (14) from said structure (12), wherein each hanger (16) has a first coupling element configured to be attached to said structure (12) and a second coupling element attached to said body (14) at a body attachment point located lower than a center of mass of said pendulum body (14), such that said pendulum body (14) is tiltable with respect to the vertical; and
- a damping unit (18) attached to said pendulum body (14) and configured to be attached to said structure (12) characterized in that
said damping unit (18) is attached to a part of said pendulum body (14) located above said body attachment points.

Fig. 1

**Description**

The present invention relates to a pendulum vibration damper for damping vibrations of a structure, to a structure comprising such a damper, as well as to a computer-implemented method for configuring such a damper such as to minimize asymmetric nonlinearities.

Vibrations cause a number of problems for engineering structures such as buildings and towers, including smoke-stacks and wind turbine towers. Vibrations are caused by forces from the environment, including wind forces, aerodynamic phenomena, and earthquakes, and from human activity including footsteps and traffic. Vibrations can lead to wear, material fatigue, structural failure, and reduced comfort, and thus reduce the life-time and/or usability of a structure.

Structure vibrations can often be mitigated cheaply and effectively by use of a vibration damper, sometimes called a Tuned Mass Damper (TMD) or a Dynamic Vibration Absorber (DVA). A vibration damper is a component added to the structure which reduces the vibrations by absorbing the vibration energy and converting it into heat. The dampers considered here are passive devices, i.e. with no motors or power sources, whose vibrations are tuned to resonate with the structure. Such dampers work by inertial forces acting between the mass of the damper and the structure.

A vibration damper generally comprises an oscillator and a dissipation mechanism. The oscillator can for example be a pendulum, a mass on a number of springs, a flexible beam, a mass of liquid capable of sloshing back and forth. The dissipation mechanism can for example be one or more dashpots, a material with viscoelastic properties such as e.g. bitumen whose deformation converts mechanical energy into heat, a number of parts in relative sliding motion, arranged such that friction converts mechanical energy into heat, or a mass of liquid, where drag forces and viscous forces convert mechanical energy into heat. The dissipation mechanism provides the so-called internal damping, which is the damping of the oscillator and can be measured e.g. by the so-called logarithmic decrement of the oscillator by letting the oscillator vibrate, until all the mechanical energy has been converted into heat, while the motion is recorded using e.g. an accelerometer. A vibration damper can also, more generally comprise multiple coupled oscillators, such as the TG Broadband Damper, which comprises two oscillators. In the latter case, the concept of the internal damping still applies for each oscillator.

For horizontal vibrations of tall structures, especially considering the fundamental vibration mode of the structure, the eigenfrequency can be very low. This is also the case for wind turbine towers, which tend to be built upon increasingly high towers.

Vibration dampers for these cases are typically made with oscillators comprising a pendulum. A pendulum vibrates, because the geometric constraint afforded by the hangers implies an increased gravitational potential energy being associated with a sideways motion of the pendulum. The frequency of a classical pendulum can be chosen by adjusting the length $L$ of the hanger(s) holding the pendulum, with longer hangers corresponding to a lower frequency $f$ according to the classical relation $f = \frac{1}{2\pi}\sqrt{\frac{g}{L}}$, where $g$ is the acceleration due to gravity. This means that very low frequencies require very long pendulum hangers. For example, a frequency of $f = 0.10 Hz$ would require pendulum hangers of length $L = 25m$. Hangers of such or even longer lengths are extremely impractical.

As a generic example, consider a steel tower of mass 100 tonnes, which tends to vibrate horizontally back and forth at a frequency of 2 Hz, known as the tower eigenfrequency, with the greatest vibration amplitude at the tower top. The vibrations can be reduced and in some cases completely eliminated by installing a pendulum vibration damper, comprising a 3 tonnes pendulum suspended by a couple of hangers from inside the tower near the tower top. The pendulum is tuned to an appropriate frequency close to the tower eigenfrequency. Furthermore, the pendulum motion is inhibited by a dissipation mechanism incorporated in a damping unit comprising a number of dashpots, similar to the shock absorbers in a car, which convert the kinetic energy of pendulum motion into heat.

The dissipation mechanism furthermore poses a challenge for very low-frequency vibration dampers. An often-used damping unit to serve as a dissipation mechanism for horizontally acting vibration dampers contains a container with a liquid and a free surface, where the sideways sloshing motion of the liquid acts as the oscillator, or where the oscillator is partially or fully immersed in the liquid, and the oscillator motion induces sideways sloshing motion of the liquid. In these cases, viscous dissipation in the liquid flow converts mechanical energy into heat. These mechanisms are impractical for very low structure eigenfrequencies, where the liquid container needs to have very large horizontal dimensions. Furthermore, many applications including smoke-stacks and wind turbine towers require the vibration damper to work regardless of large temperature variations, limiting the use of oils and other viscous liquids. This means that many traditionally used dissipation mechanisms tend to be ineffective for vibration dampers of compact size at very low structure eigenfrequencies, especially for structures such as smoke-stacks and wind turbine towers.

In any case, it is necessary to be able to tune the oscillators in the vibration damper, i.e. to adjust their frequencies to be in a specific ratio to the structure eigenfrequency. It is also necessary to be able to select the dissipation mechanism so as to obtain the right amount of internal damping, since both insufficient internal damping and excessive damping reduces the effectiveness of the vibration damper.

Consequently, the damping unit operating as a dissipation mechanism is an essential component of the pendulum vibration damper.

Document DE 10 2016 122 999 A1 discloses a pendulum vibration damper for damping vibrations of a structure, comprising:

- a pendulum body having a mass;
- at least three hangers configured to hingedly suspend said pendulum body from said structure, wherein each hanger has a first coupling element configured to be attached to said structure and a second coupling element attached to said body at a body attachment point located lower than a center of mass of said pendulum body, such that said pendulum body is tiltable with respect to the vertical; and
a damping unit attached to said pendulum body and configured to be attached to said structure.

As explained in this document, the tiltability of the pendulum body with respect to the vertical allows to use shorter hangers for damping low frequency vibrations.

In connection with the necessary damping mechanism this document proposes to attach the damping unit to a lower plate on which the pendulum body is fixed.

However, during use the damping unit is subject to wear that can change its damping characteristics. Furthermore there is a risk of the damping unit being damaged in particular in case of strong vibrations of the structure.

It is therefore an object of the invention to propose a pendulum vibration damper of the kind presented above which reduces the risk of wear and of damage on the damping unit.

According to the invention this object is achieved when said damping unit is attached to a part of said pendulum body located above said body attachment points.

In this case the damping unit connects the pendulum body to the structure, and is attached above the points, where the pendulum body is attached to the hangers. Consequently, the upper part of the staggering pendulum body travels a longer distance than the lower part of the staggering pendulum body. Thus, the damping unit does not have to deliver as much force on the pendulum body in order to achieve a given level of internal damping. As a consequence, the forces acting on the damping unit will be lower, thus reducing wear and the risk of damage on the damping unit components. As a further advantage the damping unit can then be made lighter and more cheaply than would be the case, if it was attached to the lower part of the staggering pendulum body.

Preferably said damping unit is attached to a part of said pendulum body located above a center of mass of said pendulum body, further preferably to a upper part of said pendulum body. The closer the attachment point of the damping unit is located to the upper part of the pendulum body, the longer its traveling distance caused by the staggering movement of the pendulum body becomes and the more pronounced the advantageous effect of the invention can be achieved.

In a simple embodiment said damping unit may comprise at least one dashpot.

In addition or as an alternative, said damping unit may also comprise at least one friction damper.

In the latter case said at least one friction damper preferably comprises at least one friction body slidably arranged on a plate configured to be connected to said structure, said friction body being engaged by an engagement element attached to or integral with said pendulum body. The staggering movement of the pendulum body then forces the at least one friction body to slide on the plate which will dissipate energy by friction.

In the design of vibration dampers, it is important to maximize the range of motion of the oscillator, because a higher oscillator motion range leads to a higher maximum vibration amplitude of the structure, for which the vibration damper is effective. However, the upper part of a staggering pendulum body with straight vertical sides will tend to impact any side walls of the structure or any other restrictions sooner than the bottom of the staggering pendulum body thus limiting the available horizontal range of motion. Therefore, in a preferred embodiment of the invention said pendulum body has an at least partially tapered shape such that its horizontal cross-section in its upper part is smaller than its horizontal cross-section in its lower part. Such a design allows to make optimal use of the available horizontal space in the structure whose vibrations are to be damped.

In order for a vibration damper to be practical, the installation and manufacture must be planned for ease and flexibility. In particular, one needs the capability of on-site adjustments of the vibration damper properties, including the oscillator frequency and equilibrium location. The latter capability is also needed in order to compensate for manufacturing inaccuracies and slight deviations of the structure supports away from horizontal. In a preferred embodiment of the invention said pendulum body therefore comprises a base and a plurality of pendulum body elements configured to be separately added to or removed from said base. It is therefore easy to increase or reduce the mass of the damper body on site by adding or removing one or more additional pendulum body elements, respectively.

Said pendulum body elements can preferably be pendulum body plates configured to be stacked on each other.

In the embodiments using a base and a plurality of pendulum body elements said base may preferably have a truss structure. In this case the base represents a lightweight support structure in order to maintain a high centre of mass of the pendulum body. The total mass of the pendulum body is then essentially determined by the plurality of pendulum body elements each having a predetermined individual mass.

In a preferred embodiment the pendulum vibration damper according to the invention furthermore comprises a plurality of structure rails configured to be attached to said structure with a vertical and/or horizontal orientation, wherein each of said first coupling elements is configured to be slidably attached to a respective one of said structure rails. This may be done by attaching hinges of these first coupling elements to the vertical structure rails e.g. with a thread/nut combination allowing an operator to lower/raise the hinges. These arrangements allow the staggering pendulum to be adjusted, in order to compensate for manufacturing inaccuracies, and deviations of the structure supports away from horizontal.

In addition or alternatively, the pendulum vibration damper according to the invention may furthermore comprise a plurality of pendulum body rails attached to said pendulum body with a vertical and/or horizontal orientation, wherein each of said second coupling elements is slidably attached to a respective one of said pendulum body rails. This arrangement allows a further particularly precise compensation for manufacturing inaccuracies, and deviations of the structure supports away from horizontal.

In all embodiments discussed above said hangers can be wires, steel wire ropes, bars, rods, or beams, or a combination thereof.

The invention furthermore refers to a structure, comprising a pendulum vibration damper according to any of the embodiments described above.

Typically the structure can be a wind turbine tower, a building, a building floor, a bridge, a footbridge or stairs.

In all embodiments of a pendulum vibration damper according to the invention as discussed above it is desirable to minimize non-linearities of the oscillator, which would cause the oscillator's behaviour, including its frequency, to depend on the amplitude and direction of the vibration. In particular, asymmetric non-linearities must be minimized, in order to have the same oscillator vibration frequency in every horizontal direction. The stability of the oscillator is a further concern, as some oscillators lose the restoring force, when the displacement from equilibrium becomes sufficiently large. This latter behaviour is clearly unwanted in a vibration damper.

The invention therefore furthermore refers to a computer-implemented method for configuring a pendulum vibration damper according to any of the embodiments discussed above having 3 hangers such as to minimize asymmetric nonlinearities, comprising:

numerically minimizing the absolute value of a coefficient $z_3$ defined as

$$z_3 = \frac{r}{72h^2(B\lambda + hr)^4}\left( 2B\cdot \right.$$
$$\left(h^2(3\lambda+r)\left(4L^2r+\lambda^2(3\lambda+2r)\right)-4h^4r(3\lambda+2r)+r(L^2-\lambda^2)\left(4L^2r-\lambda^2(3\lambda+r)\right)\right)$$
$$\left. + 3h\lambda r\left(4h^2r(2\lambda+r)-4L^2r(2\lambda+r)+\lambda^2(r-\lambda)(3\lambda+r)\right)\right)$$

wherein:

$L$ is the length of each of said hangers,
$r$ is the horizontal radius from the second coupling element of the hanger to the center of mass of the pendulum body,
$\lambda$ is the horizontal extent of the hanger,
$h$ is the vertical extent of the hanger,
$B$ is the height of the centre of mass of the pendulum body measured from the second coupling element,
$m$ is the mass of the pendulum body, and
$g$ is the gravitational acceleration.

Preferred embodiments of the invention will be discussed in the following in connection with the attached figures, in which:

Fig. 1    shows a schematic side view of a general pendulum vibration damper according to the invention in a horizontally centered position;
Fig. 2    shows a schematic top view of the pendulum vibration damper of Fig. 1;

Fig. 3      shows a schematic side view similar to Fig. 1 in case of a horizontal movement and a resulting staggering of the pendulum body;

Fig. 4      shows an embodiment of the pendulum vibration damper according to the invention using a dashpot as a damping unit;

Fig. 5      shows another embodiment of the pendulum vibration damper according to the invention using a friction damper as a damping unit;

Fig. 6      shows a further embodiment of the pendulum vibration damper according to the invention using a partially tapered pendulum body;

Fig. 7      shows yet another embodiment of the pendulum vibration damper according to the invention using a pendulum body that comprises a base having a truss structure and a plurality of pendulum body plates stacked thereon;

Fig. 8      shows an enlarged perspective view of a vertical structure rail used in yet another embodiment of the pendulum vibration damper according to the invention;

Fig. 9      shows a schematic side view similar to Fig. 1 in which parameters used during numerical configuration of a pendulum vibration damper according to the invention are indicated; and

Fig. 10     shows a schematic top view similar to Fig. 2 in which parameters used during numerical configuration of a pendulum vibration damper according to the invention are indicated.

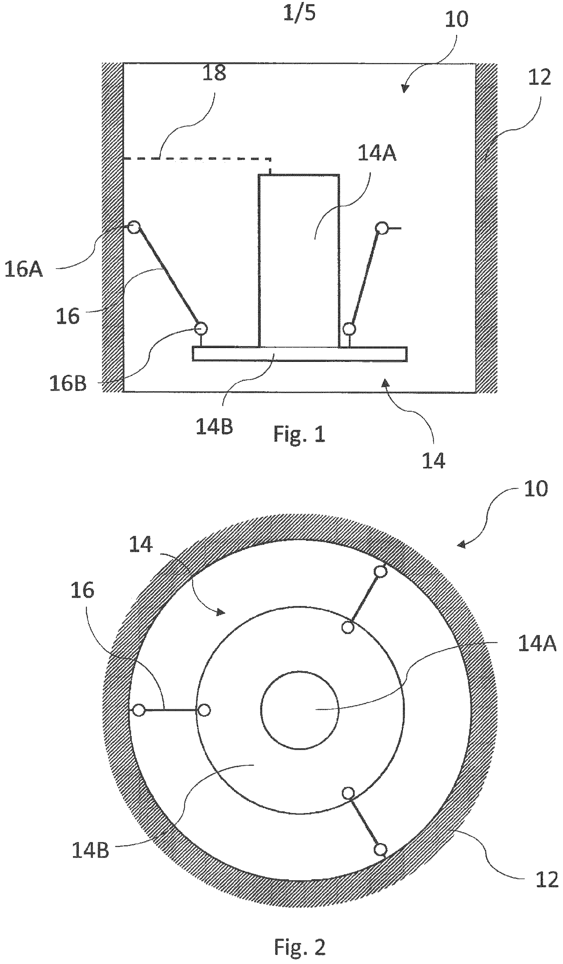

Figs. 1 and 2 show a schematic side view and a schematic top view, respectively, of a general pendulum vibration damper 10 according to the invention in a horizontally centered position. This horizontally centered position represents an initial position in which the pendulum vibration damper 10 is at rest in the absence of any oscillations. The pendulum vibration damper 10 is intended to damp vibrations of a structure 12. In all figures only parts of the walls of the structure 12 are schematically indicated by hatched portions. The pendulum vibration damper 10 comprises a pendulum body 14 made e.g. from steel or concrete that is hingedly suspended from the structure 12 by means of hangers 16. As can be seen in the top view of Fig. 2 the pendulum vibration damper 10 of this embodiment is equipped with three hangers 16 that are positioned in an arrangement which is symmetrical under 120° rotations. In particular the three hangers 16 are distributed along the circumference of the pendulum body 14 with equal angles of 120° between each pair of adjacent hangers 16. Each hanger 16 has the same inclination with respect to vertical. The hangers 16 can e.g. be wires, steel wire ropes, bars, rods, or beams.

In all embodiments shown in the figures the pendulum body 14 comprises a main cylindrical part 14A extending essentially along the vertical direction and a lower plate shaped part 14B extending essentially along the horizontal direction.

Each hanger 16 has a first coupling element 16A configured to be hingedly attached to the structure 12. The corresponding hinge may be provided at the structure 12 and/or as part of the first coupling element 16A.

Furthermore each hanger 16 has a second coupling element 16B hingedly attached to the pendulum body 14. The corresponding hinge may be provided at the pendulum body 14 and/or as part of the second coupling element 16B.

The center of mass of the rigid pendulum body 14 is located higher than the points, where the hangers 16 are attached to the pendulum body 14, i.e. higher than the second coupling elements 16B.

The pendulum vibration damper 10 furthermore has a damping unit 18 which is only schematically indicated by a dashed line in Fig. 1. It connects the structure 12 to an upper part of the main cylindrical part 14A of the pendulum body 14.

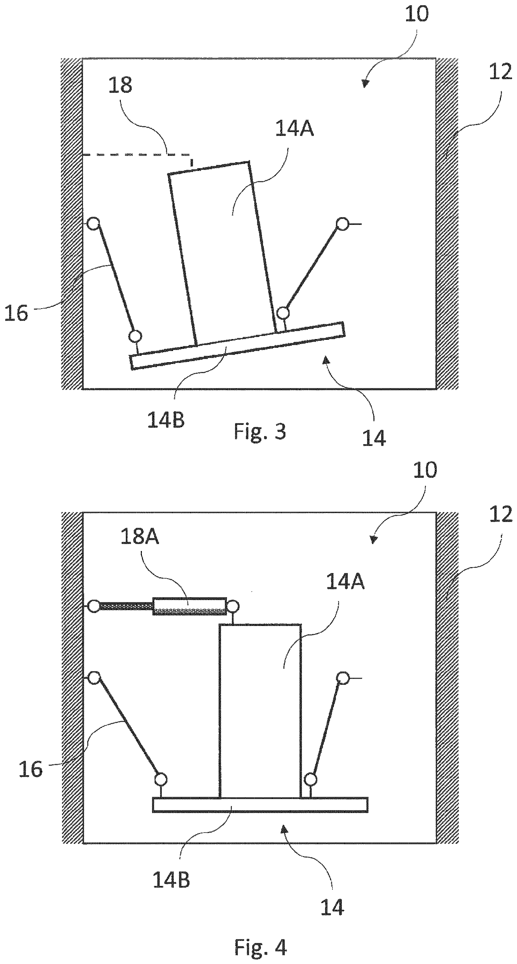

The suspension of the pendulum body 14 from the structure 12 by means of at least three hangers 16 causes a staggering behavior of the pendulum body 14. This will be explained in the following by reference to Fig. 3 which shows a schematic side view similar to Fig. 1 in case of a horizontal movement and a resulting staggering of the pendulum body 14.

The term "staggering" means that when the pendulum body 14 moves to the side during an oscillation, in the first place the pendulum body 14 moves upwards due to the rotation of the hangers 16, similar to an ordinary pendulum with vertical hangers. In the second place, as a consequence of its suspension by the hangers 16 at body attachment points located lower than a center of mass of the pendulum body 14, the pendulum body 14 furthermore tilts with respect to the vertical, thus lowering the centre of mass. The latter effect leads to a reduction of the gravitational potential energy associated with a sideways displacement of the staggering pendulum centre of mass, which again leads to a reduction of the staggering pendulum frequency, compared to the frequency of an ordinary pendulum with vertical hangers of the same length.

In other words, the tilting or staggering of the pendulum body 14 is a necessary consequence of the horizontal motion of the pendulum body 14 due to the geometry of the hangers 16 suspending the pendulum body 14 at body attachment points which are located lower than the center of mass of the pendulum body.

As a consequence of the tilting motion which necessarily accompanies any horizontal motion of the staggering pendulum body 14, the bottom of the pendulum body 14 travels a shorter distance relative to the structure 12 than the regions of the pendulum body 14 which are located above the body attachment points, in particular the top of the pendulum body 14, as can be seen in Fig. 3.

This is the reason why the pendulum vibration damper 10 according to the invention has its damping unit attached to a part of said pendulum body 14 located above said body attachment points.

In this case the damping unit 18 connects the staggering pendulum body 14 to the structure 12, and is attached above the body attachment points, where the pendulum body 14 is attached to the hangers 16. Since the upper part of the staggering pendulum body 14 travels a longer distance than its lower part, the damping unit 18 does not have to deliver as much force on the pendulum body 14 in order to achieve a given level of internal damping. As a consequence, the forces acting on the damping unit 18 will be lower, thus reducing wear and the risk of damage on the damping unit components. As a further advantage the damping unit 18 can then be made lighter and cheaper than would be the case if it was attached to the lower part of the staggering pendulum body 14.

Fig. 4 shows an embodiment of the pendulum vibration damper 10 according to the invention using a dashpot 18A as a damping unit. It connects the top of the pendulum body 14 and a wall of the structure 12. In the initial position shown in Fig. 4 the dashpot 18A extends essentially in a horizontal direction. However, the dashpot 18A can also be inclined in the initial position, in particular to make sure that damping liquid inside the dashpot 18A does not flow out through a filling opening provided in the housing of the dashpot 18A.

The pendulum vibration damper 10 according to the invention preferably uses a plurality of dashpots 18A for damping oscillations in different directions, advantageously at least two dashpots 18A, preferably three dashpots 18A.

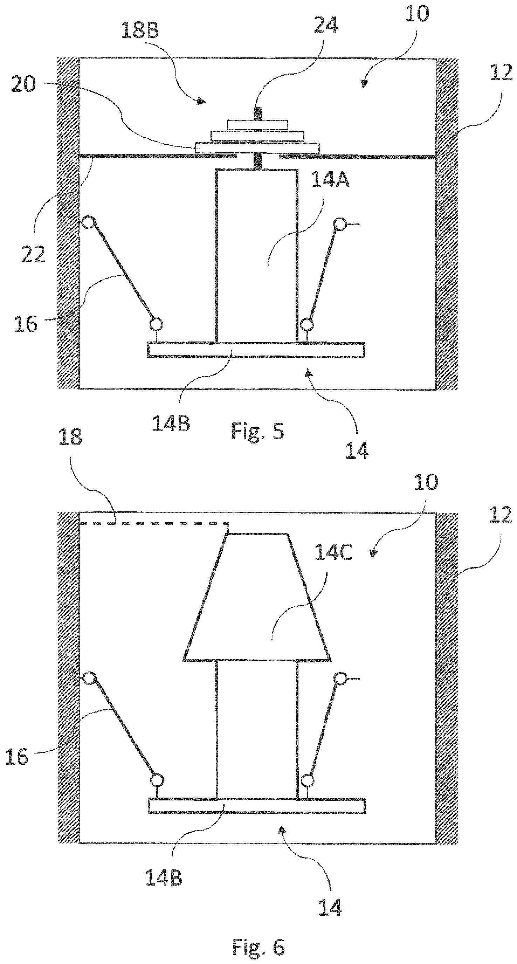

Fig. 5 shows another embodiment of the pendulum vibration damper 10 according to the invention using a friction damper 18B as a damping unit. The friction damper 18B comprises three friction bodies 20 slidably arranged on a plate 22 connected to said structure 12. The three friction bodies 20 are engaged by a bar-shaped engagement element 24 attached to said pendulum body 14. To this purpose each of the three friction bodies 20 is provided with a central through hole. The three friction bodies 20 are stacked on each other in such a way that their through holes are aligned. The bar-shaped engagement element 24 fixedly connected to the pendulum body 14 passes through the three through holes. The movement of the pendulum body 14 including its translation and its staggering movement then forces the friction bodies 20 to slide on the plate 22 and/or on each other which will dissipate energy by friction. Furthermore oscillations in both horizontal directions can be damped.

Fig. 6 shows a further embodiment of the pendulum vibration damper 10 according to the invention using a partially tapered pendulum body 14. Compared to the embodiment shown in Fig. 1 the cylindrical part 14A arranged on the lower plate shaped part 14B is reduced in height. A truncated cone part 14C is fixedly attached on or integrally formed with the top of the cylindrical part 14A. As shown in Fig. 6 the truncated cone is arranged such that its smaller cross-section is positioned at the top and its larger horizontal cross-section is located at the bottom adjacent to the cylindrical part 14A.

In other words, the staggering pendulum body 14 is shaped with a narrow upper part and a wider middle part, such as to better utilize the available horizontal footprint for the vibration damper 10, while keeping the centre of mass high above the attachment points of the hangers 16 to the staggering pendulum body 14. This is beneficial, because a high centre of mass contributes to a low frequency. The tapered shape can be adapted such that the structure-attached hinges for the hangers 16 do not reduce the available space for the staggering pendulum motion. As a safety measure fenders made from rubber or any other resilient material (not shown) can be arranged on the walls of the structure 12 in regions that could be hit by the staggering pendulum body 14 in case of extreme oscillations.

The embodiment shown in Fig. 6 allows to maximize the range of motion of the pendulum body 14, because larger vibration amplitudes can be accepted compared to the essentially cylindrical embodiment in Fig. 1 before the pendulum body 14 risks to impact any side walls of the structure 12.

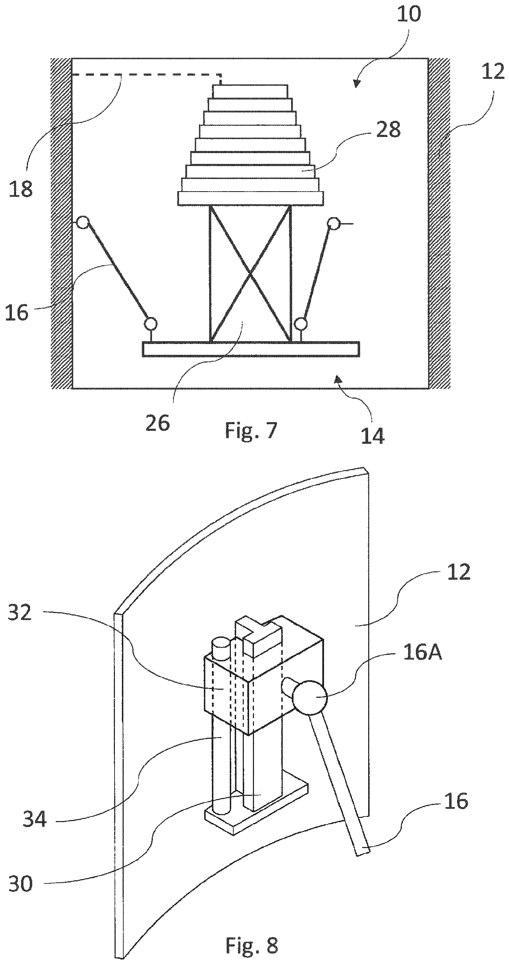

Fig. 7 shows yet another embodiment of the pendulum vibration damper 10 according to the invention using a pendulum body 14 that comprises a base 26 having a truss structure and a plurality of pendulum body elements shaped as pendulum body plates 28 stacked thereon. This embodiment provides the possibility to easily increase or reduce the mass of the damper body 14 on site by adding or removing one or more additional pendulum body elements 28, respectively.

In the embodiment of Fig. 7 the hangers 16 are attached to a plate forming a lower part of the base 26. However, it is also conceivable that this plate is omitted and the hangers 16 are directly attached to the truss structure part of the base 26. This allows to even further reduce the weight of the base 26 in order to further shift the center of mass of the pendulum body 14 upwards.

The base 26 of this embodiment has a truss structure. Consequently, it represents a lightweight support structure in order to maintain a high centre of mass of the pendulum body 14. The total mass of the pendulum body 14 is then essentially determined by the plurality of pendulum body elements 28 each having a predetermined individual mass.

Fig. 8 shows an enlarged perspective view of a vertical structure rail 30 used in yet another embodiment of the pendulum vibration damper 10 according to the invention. In this preferred embodiment a vertical structure rail 30 is provided for each hanger 16 and is attached to an inner wall of said structure 12 with an essentially vertical orientation. In the enlarged perspective view of Fig. 8 only one of the structure rails 30 and its associated hanger 16 are shown. The first coupling element 16A of the hanger 16 is attached to a slider 32 that is movable up and down in a controlled manner along the rail 30. In the embodiment shown in Fig. 8 this controllable movement of the slider 32 is realized by means of a a threaded rod 34 driving the slider 32 by means of a thread/nut combination. Other types of driving mechanisms allowing an operator to lower/raise the first coupling element 16A and thus the respective upper hinge of each hanger 16 are conceivable. These arrangements allow the staggering pendulum to be adjusted, in order to compensate for manufacturing inaccuracies, and deviations of the structure supports away from horizontal.

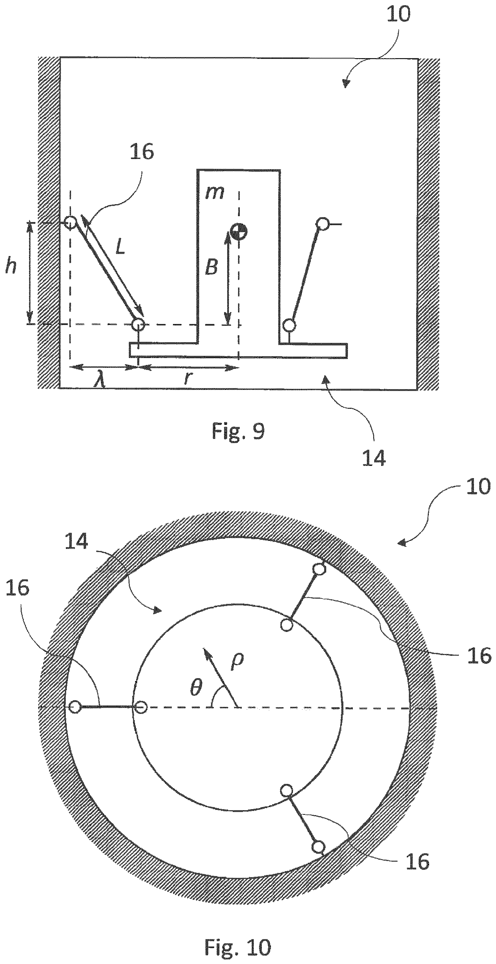

Figs. 9 and 10 show a schematic side view similar to Fig. 1 and a schematic top view similar to Fig. 2, respectively, in which parameters used during numerical configuration of a preferred pendulum vibration damper 10 according to the invention having three hangers 16 are indicated. The inventors have found out that the provision of three hangers 16 on the one hand offers advantages in terms of stability of the pendulum vibration damper 10 but on the other hand can introduce asymmetric nonlinearities into the oscillation behavior. A thorough numerical configuration of such a pendulum vibration damper 10 allows to minimize and in many cases even to completely avoid these asymmetric nonlinearities.

In connection with this numerical configuration the following notation is used: The length of each of the three hangers 16 is denoted as $L$, the radius of the point of attachement of each hanger to the pendulum body 14 as $r$, the horizontal extent of the hanger 16 as $\lambda$, the vertical extent of the hanger 16 as $h$. Note that $L = \sqrt{\lambda^2 + h^2}$. The height of the pendulum body centre of mass measured from the points, where the hangers 16 are attached to the pendulum body 14, is denoted as $B$. The gravitational potential energy $V$ of the pendulum body 14 can then be expressed, when the centre of mass is displaced a distance $\rho$ from the centre-line (in cylindrical ($\rho$, $\theta$)-coordinates, where $\theta$ is the angle from one of the horizontal symmetry lines of the setup). The mass of the pendulum body 14 is denoted $m$, and the gravitational acceleration is denoted $g$. The resulting expression is, to 4th order in $\rho$,

$$V = mg\left(z_2\,\rho^2 + z_3\,\rho^3\cos 3\theta + z_4\,\rho^4\right)$$

with

$$z_2 = \frac{\lambda^2\left(r^2 - 6Bh\right) + 2r^2\left(2h^2 + L^2\right) + 3\lambda^3 r}{12h(B\lambda + hr)^2}$$

and

$$z_3 = \frac{r}{72h^2(B\lambda + hr)^4}\left(2B\cdot\right.$$
$$\left(h^2(3\lambda+r)\left(4L^2r+\lambda^2(3\lambda+2r)\right)-4h^4r(3\lambda+2r)+r(L^2-\lambda^2)\left(4L^2r-\lambda^2(3\lambda+r)\right)\right)$$
$$\left. + 3h\lambda r\left(4h^2r(2\lambda+r)-4L^2r(2\lambda+r)+\lambda^2(r-\lambda)(3\lambda+r)\right)\right)$$

By using the above expression for $z_2$, the frequency of low-amplitude vibrations can be computed. The lowest order asymmetric nonlinearity can be computed from the above expression for $z_3$. It is strongly desirable to minimize the asymmetric nonlinearity, which can be done by numerically minimizing the absolute value $|z_3|$ of $z_3$, while keeping the target staggering pendulum frequency fixed.

The invention is not limited to the above-described embodiments. As an example, the shape of the pendulum body 14 may be different from the above described examples having a main cylindrical part and a lower plate shaped part, or having a truncated cone part on top of a reduced cylindrical part. In particular it is conceivable that essentially the entire pendulum body 14 has the shape of a single truncated cone.

Furthermore it is to be emphasized that the pendulum vibration damper 10 according to the invention may be directly attached to the structure 12, as shown in the above embodiments, but may also be indirectly attached to the structure 12 via some intermediate device. This intermediate device may itself be a separate oscillator, e.g. a non-staggering pendulum. In such a case, the non-staggering pendulum would be directly attached to the structure 12, and the pendulum vibration damper 10 according to the invention would be attached to the non-staggering pendulum. The non-staggering pendulum and the pendulum vibration damper 10 according to the invention then together form a series damper.

In the embodiments using a friction damper 18B the engagement element can also be integral with the pendulum body 14. Furthermore, in all the embodiments shown in the figures and discussed above, the hinges connecting the hangers 16 for the staggering pendulum to the structure 12 can be slidably attached to rails fixed to the structure 12, such that they can be easily adjusted vertically up or down. This may be done by attaching these hinges to vertical rails, with a thread/nut combination allowing to lower/raise the hinges. These arrangements allow the pendulum body 14 to be adjusted, in order to compensate for manufacturing inaccuracies, and deviations of the structure supports away from horizontal. The hinges may be further adjustable by additional rails fixed to the pendulum body 14, allowing horizontal displacements as well.

In embodiments of the pendulum vibration damper 10 according to the invention that make use of structure rails configured to be attached to the structure 12 and/or pendulum body rails attached to the pendulum body 14, these rails may at least partly extend in a direction perpendicular to the walls of the structure such as to allow for a change of the inclination of the hangers 16. This allows for an improved adjustment of the pendulum vibration damper 10 to the vibrations of the structure 12. In particular this would allow the frequency to be adjusted.

Furthermore a pendulum body 14 having an at least partially tapered shape as discussed above in connection with Fig. 6 is advantageous irrespective of the question where the damping unit 18 is attached to the pendulum body 14.

In a similar way, a pendulum body 14 comprising a base 26 and a plurality of pendulum body elements 28 as discussed above in connection with Fig. 7 is advantageous irrespective of the question where the damping unit 18 is attached to the pendulum body 14. This holds true in particular when the base 26 has a truss structure and/or the pendulum body elements are pendulum body plates configured to be stacked on each other.

Finally provision of structure rails configured to be attached to the structure 12 and/or pendulum body rails attached to the pendulum body 14 as discussed above is advantageous irrespective of the question where the damping unit 18 is attached to the pendulum body 14.

**Claims**

1. A pendulum vibration damper (10) for damping vibrations of a structure (12), comprising:

   - a pendulum body (14) having a mass (m);
   - at least three hangers (16) configured to hingedly suspend said pendulum body (14) from said structure (12), wherein each hanger (16) has a first coupling element (16A) configured to be attached to said structure (12) and a second coupling element (16B) attached to said body (14) at a body attachment point located lower than a center of mass of said pendulum body (14), such that said pendulum body (14) is tiltable with respect to the vertical; and
   - a damping unit (18) attached to said pendulum body (14) and configured to be attached to said structure (12) **characterized in that** said damping unit (18) is attached to a part of said pendulum body (14) located above said body attachment points.

2. A pendulum vibration damper (10) according to claim 1, **characterized in that** said damping unit (18) is attached to a part of said pendulum body (14) located above a center of mass of said pendulum body (14), preferably to an upper part of said pendulum body (14).

3. A pendulum vibration damper (10) according to any of the preceding claims, **characterized in that** said damping unit (18) comprises at least one dashpot (18A).

4. A pendulum vibration damper (10) according to any of the preceding claims, **characterized in that** said damping unit (18) comprises at least one friction damper (18B).

5. A pendulum vibration damper (10) according to the preceding claim, **characterized in that** said at least one friction damper (18B) comprises at least one friction body (20) slidably arranged on a plate (22) configured to be connected to said structure (12), said friction body (20) being engaged by an engagement element (24) attached to or integral with said pendulum body (14).

6. A pendulum vibration damper (10) according to any of the preceding claims, **characterized in that** said pendulum body (14) has an at least partially tapered shape such that its horizontal cross-section in its upper part is smaller than its horizontal cross-section in its lower part.

7. A pendulum vibration damper (10) according to any of the preceding claims, **characterized in that** said pendulum body (14) comprises a base (26) and a plurality of pendulum body elements (28) configured to be separately added to or removed from said base (26).

8. A pendulum vibration damper (10) according to the preceding claim, **characterized in that** said pendulum body elements (28) are pendulum body plates configured to be stacked on each other.

9. A pendulum vibration damper (10) according to claim 7 or 8 when combined with claim 7, **characterized in that** said base (26) has a truss structure.

10. A pendulum vibration damper (10) according to any of the preceding claims, **characterized in that** it furthermore comprises a plurality of structure rails configured to be attached to said structure (12) with a vertical and/or horizontal orientation, wherein each of said first coupling elements (16A) is configured to be slidably attached to a respective one of said structure rails.

11. A pendulum vibration damper (10) according to any of the preceding claims, **characterized in that** it furthermore comprises a plurality of pendulum body rails attached to said pendulum body (14) with a vertical and/or horizontal orientation, wherein each of said second coupling elements (16B) is slidably attached to a respective one of said pendulum body rails.

12. A pendulum vibration damper (10) according to any of the preceding claims, **characterized in that** said hangers (16) are wires, steel wire ropes, bars, rods, or beams, or a combination thereof.

13. A structure (12), comprising a pendulum vibration damper (10) according to any of the preceding claims.

14. A structure (12) according to the preceding claim, wherein the structure (12) is a wind turbine tower, a building, a building floor, a bridge, a footbridge or stairs.

15. A computer-implemented method for configuring a pendulum vibration damper (10) according to any of claims 1 to 12 having 3 hangers (16) such as to minimize asymmetric nonlinearities, comprising:
numerically minimizing the absolute value $|z_3|$ of a coefficient $z_3$ defined as

$$z_3 = \frac{r}{72h^2(B\lambda + hr)^4}\left(2B\cdot\right.$$
$$\left(h^2(3\lambda+r)\left(4L^2r+\lambda^2(3\lambda+2r)\right)-4h^4r(3\lambda+2r)+r(L^2-\lambda^2)\left(4L^2r-\lambda^2(3\lambda+r)\right)\right)$$
$$\left.+3h\lambda r\left(4h^2r(2\lambda+r)-4L^2r(2\lambda+r)+\lambda^2(r-\lambda)(3\lambda+r)\right)\right)$$

wherein:

L is the length of each of said hangers (16),
r is the horizontal radius from the second coupling element of the hanger (16) to the center of mass of the pendulum body (14),
$\lambda$ is the horizontal extent of the hanger (16),
h is the vertical extent of the hanger (16),
B is the height of the centre of mass of the pendulum body (14) measured from the second coupling element,
m is the mass of the pendulum body (14), and
g is the gravitational acceleration.

1/5

Fig. 1

Fig. 2

Fig. 3

Fig. 4

Fig. 5

Fig. 6

10

12

28

18

16

26    Fig. 7    14

32

12

16A

34

30

16

Fig. 8

Fig. 9

Fig. 10

Europäisches
Patentamt

European
Patent Office

Office européen
des brevets

## EUROPEAN SEARCH REPORT

Application Number

EP 20 15 5119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 860 507 A (GARZA-TAMEZ FEDERICO [MX]) 29 August 1989 (1989-08-29) | 1-3,6, 10-14 | INV. F16F7/10 |
| A | * the whole document * | 4,5,7-9, 15 | |
| X | US 6 115 972 A (TAMEZ FEDERICO GARZA [MX]) 12 September 2000 (2000-09-12) | 1,2,4,5, 10-14 | |
| A | * the whole document * | 3,6-9,15 | |
| X | US 2013/326969 A1 (KIENHOLZ DAVID A [US] ET AL) 12 December 2013 (2013-12-12) | 1,2,7-9, 12-14 | |
| A | * the whole document * | 3-6,10, 11,15 | |
| A | DE 42 31 725 A1 (SELKIRK SCHORNSTEINTECHNIK GMB [DE]) 24 March 1994 (1994-03-24) * the whole document * | 1-15 | |
| | | | TECHNICAL FIELDS SEARCHED (IPC) |
| | | | F16F E04H E04B |

The present search report has been drawn up for all claims

| Place of search | Date of completion of the search | Examiner |
|---|---|---|
| The Hague | 6 August 2020 | Werth, Jochen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 15 5119

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2020

| Patent document cited in search report | | Publication date | Patent family member(s) | | Publication date |
|---|---|---|---|---|---|
| US 4860507 | A | 29-08-1989 | CA | 1320970 C | 03-08-1993 |
| | | | JP | 2602098 B2 | 23-04-1997 |
| | | | JP | H0254041 A | 23-02-1990 |
| | | | MX | 165637 B | 25-11-1992 |
| | | | NZ | 229915 A | 28-10-1992 |
| | | | US | 4860507 A | 29-08-1989 |
| US 6115972 | A | 12-09-2000 | NONE | | |
| US 2013326969 | A1 | 12-12-2013 | EP | 2681463 A1 | 08-01-2014 |
| | | | JP | 2014511466 A | 15-05-2014 |
| | | | US | 2013326969 A1 | 12-12-2013 |
| | | | WO | 2012121694 A1 | 13-09-2012 |
| DE 4231725 | A1 | 24-03-1994 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016122999 A1